# EUROPÄISCHE PATENTSCHRIFT

(11) **EP 2 283 253 B1**
(45) Veröffentlichungstag und Bekanntmachung des Hinweises auf die Patenterteilung: **04.01.2012**
(21) Anmeldenummer: 09777227.1
(22) Anmeldetag: 16.07.2009
(51) Int. Cl.: F16H 47/08, F16H 3/095

(54) **ÜBERLAGERUNGSGETRIEBE MIT KOPPLUNGSWELLEN**
SUPERIMPOSED TRANSMISSION HAVING COUPLING SHAFTS
ORGANE DE TRANSMISSION À SUPERPOSITION AVEC ARBRES D ACCOUPLEMENT

(30) Priorität: 25.07.2008 DE 102008034607
(43) Veröffentlichungstag der Anmeldung: 16.02.2011
(73) Patentinhaber: Voith Patent GmbH, 89522 Heidenheim (DE)
(72) Erfinder: SCHROTH, Marco, 74564 Crailsheim (DE); HAHN, Kersten, 74564 Crailsheim (DE); GARF, Hartmut, 73660 Urbach (DE); HILPERT, Karl, 74564 Crailsheim (DE)
(74) Vertreter: Dr. Weitzel & Partner
(86) Internationale Anmeldenummer: PCT/EP2009/005165
(87) Internationale Veröffentlichungsnummer: WO 2010/009836

(56) Entgegenhaltungen:
- AT-B- 275 988
- DE-C- 921 729
- FR-A- 1 226 770
- FR-A- 1 325 887
- FR-A- 2 589 967
- US-A- 2 834 228
- US-A- 3 890 855

## Beschreibung

Die Erfindung betrifft ein Überlagerungsgetriebe zum Antrieb einer drehzahlvariablen Arbeitsmaschine mit dem folgenden Aufbau:
- eine Eingangswelle ist mit einer Zwischenwelle verbunden;
- mit der Zwischenwelle rotiert das Pumpenrad eines hydrodynamischen Wandlers;
- ein Turbinenrad des hydrodynamischen Wandlers rotiert mit einem Übertragungsmittel; und
- eine Zwischenwelle und das Übertragungsmittel sind mittels eines Differentialgetriebes mit einer Ausgangswelle verbunden.

Derartige Übertagenrngsgetriebe, bei welchen eine Drehzahl, welche über Eingangswelle und Zwischenwelle zur Ausgangswelle gelangt, einer zweite Drehzahl überlagert wird, welche über einen hydrodynamischen Wandler ausgekoppelt und dann über ein entsprechendes Differentialgetriebe wieder eingekoppelt wird, sind aus dem Stand der Technik grundsätzlich bekannt.

Dazu kann beispielsweise auf die Offenbarung der AT-PS 275 988 oder die DE 34 41 877 A1 verwiesen werden. Auch die DE 44 22 444 A1 zeigt ein derartiges Kraftübertragungsaggregat zum Antrieb einer drehzahlvariablen Arbeitsmaschine. Das Aggregat besteht aus einer Eingangswelle, einer Ausgangswelle mit einem hydrodynamischen Wandler, der aus Pumpenrad, Turbinenrad und Leiterrad besteht. Der hydrodynamische Wandler ist mit einem Differentialgetriebe koaxial angeordnet und ein Ausgangsgetriebeglied des Differentialgetriebes ist dauernd mit der Ausgangswelle gekoppelt.

Beim gesamten Stand der Technik ist es dabei so, dass als Übertragungsmittel zwischen der Auskopplung über den hydrodynamischen Wandler und dem Antrieb des Differentialgetriebes Hohlwellen zum Einsatz kommen. Diese Hohlwellen, welche typischerweise als umlaufende koaxiale Trommeln ausgebildet sind, weisen dabei den Nachteil auf, dass sie sehr schwer sind, ein hohes Trägheitsmoment haben und die Zugänglichkeit der in der Hohlwelle angeordneten Elemente deutlich erschweren. Damit wird letztlich der Aufbau eines besonders kompakten Getriebes durch die Hohlwellen nachteilig beeinflusst.

Zum weiteren allgemeinen Stand der Technik wird auf die US 2 834 228 A sowie die FR 1 226 770 A verwiesen.

Es ist nun die Aufgabe der hier vorliegenden Erfindung, die Nachteile im oben genannten Stand der Technik zu vermeiden und ein optimiertes Obenagerungsgetriebe mit einfachem, kompaktem und wartungsfreundlichem Aufbau zur Verfügung zu stellen.

Erfindungsgemäß wird diese Aufgabe dadurch gelöst, dass bei einem Überlagerungsgetriebe der eingangs genannten Art, die Übertragungsmittel als wenigstens zwei Kopplungswellen ausgebildet sind, welche das Turbinenrad des hydrodynamischen Wandlers gemeinsam mit dem Differentialgetriebe verbinden, wobei die wenigstens zwei Kopplungswellen parallel zur Zwischenwelle verlaufen.

Die erfindungsgemäße Lösung sieht also vor, dass die Übertragungsmittel anstatt als Hohlwelle oder als umlaufende Trommel als wenigstens zwei Kopplungswellen ausgebildet sind. Diese wenigstens zwei Kopplungswellen verbinden dann das Turbinenrad des hydrodynamischen Wandlers gemeinsam mit dem Differentialgetriebe, welches idealerweise als Planetengetriebe ausgebildet ist. Die wenigstens zwei Kopplungswellen verlaufen dabei parallel zur Zwischenwelle und übertragen die ausgekoppelte Drehzahl, welche dann im Differentialgetriebe wieder der durch die Zwischenwelle direkt vom Eingang zum Ausgang übertragenen Drehzahl überlagert wird, symetriasch. Damit kann in der herkömmlichen und bei derartigen Überlagerungsgetrieben üblichen Art und Weise die Drehzahl der Ausgangswelle entsprechend beeinflusst werden. Unter parallel im Sinne der hier vorliegenden Erfindung ist dabei jede Kopplungswelle zu verstehen, deren Drehachse parallel beziehungsweise im Rahmen der üblichen Toleranzen parallel zur Drehachse der Zwischenwelle verläuft. Die Drehachsen liegen also beabstandet parallel nebeneinander und sind in keinem Fall identisch, wie sie es beim konzentrischen Aufbau der Zwischenwelle und der diese umgebenden Hohlwelle gemäß dem Stand der Technik ausgestaltet waren.

Durch den Verzicht auf die große und mechanisch sehr komplex zu beherrschende Hohlwelle, welche je nach Aufbau des Getriebes einen vergleichsweise großen Durchmesser erreicht und damit entsprechend hohe Massen hat, kann nun durch die wenigstens zwei Kopplungswellen ein vereinfachter Aufbau erreicht werden. Auch die Zugänglichkeit der Elemente, welche bisher im Bereich der Hohlwelle angeordnet waren, kann für Montage und Wartungsarbeit jetzt deutlich erleichtert werden, da diese nun neben der Kopplungswelle liegen und somit leicht zugänglich sind.

Grundsätzlich ist es dabei natürlich auch denkbar, mehr als zwei Kopplungswellen einzusetzen. Dies kann insbesondere dann sinnvoll sein, wenn höhere Leistungen übertragen werden müssen. Es wären prinzipiell auch drei, vier, fünf, sechs, sieben, acht oder noch mehr Kopplungswellen denkbar. Hinsichtlich der Reduktion der Querkräfte und der mechanischen Zugänglichkeit der zwischen den Kopplungswellen liegenden Bereiche, stellt die Zahl von zwei Kopplungswellen jedoch ein Optimum dar, sofern die zu übertragenden Leistungen dies erlauben.

In einer besonders vorteilhaften Ausgestaltung der Erfindung sind dabei zwei Kopplungswellen vorgesehen, welche beide in einer Ebene liegen, wobei die senkrechte Projektion der Zwischenwelle auf dieser Ebene zwischen den Kopplungswellen liegt.

Durch diese Anordnung von wenigstens zwei Kopplungswellen werden Querkräfte der Kopplungswellen zueinander ausgeglichen. Dadurch werden die Querkräfte gegenüber beispielsweise einer Kopplungswelle deutlich reduziert.

Die Kopplungswellen sind dabei gemäß einer besonders günstigen Ausgestaltung der Erfindung mittels eines Getriebes mit dem Turbinenrad des hydrodynamischen Wandlers verbunden. Dieses Getriebe, welches gemäß einer bevorzugten Weiterbildung der Erfindung als Stirnradgetriebe ausgebildet ist, ermöglicht durch eine geeignete Übersetzung, die Drehrichtung und/oder Drehzahl der Kopplungswellen so zu wählen, dass eine entsprechend größere Spreizung der Übersetzungen und damit der Drehzahlen ermöglicht wird.

Gemäß einer besonders sinnvollen und vorteilhaften Weiterbildungen der Erfindung kann außerdem ein weiterer hydrodynamischer Wandler vorgesehen sein, dessen Turbinenrad mit dem Turbinerad des ersten hydrodynamischen Wandlers verbunden ist und dessen Pumpenrad ebenso wie das des ersten hydrodynamischen Wandlers, mit der Zwischenwelle verbunden ist.

Die Verbindung des Turbinenrads des ersten hydrodynamischen Wandlers mit dem Turbinenrad des zweiten hydrodynamischen Wandlers ist damit selbstverständlich gleichzeitig eine Verbindung der beiden Turbinenräder mit dem Übertragungsmittel, hier insbesondere mit dem Stirnradgetriebe, welches die beiden Turbinenräder mit den wenigstens zwei Kopplungswellen als Übertragungsmittel verbindet. Dieser Aufbau ermöglicht eine Betriebsweise, welche eine Wirkungsgradverbesserung des Überlagerungsgetriebes erlaubt wie nachfolgend bei der Erläuterung eines erfindungsgemäßen Betriebsverfahren für dieses Getriebe ersichtlich wird.

In einer sehr günstigen Fortbildung hiervon ist es außerdem vorgesehen, dass die wenigstens zwei Kopplungswellen axial parallel zu dem wenigstens einen Wandler zu liegen kommen. Der Wandler ist also zwischen der Zwischenwelle und den Kopplungswellen angeordnet. Damit kann für den zweiten Wandler der Bauraum ausgenutzt werden, der im Falle des Aufbaus gemäß dem Stand der Technik, also mit einer Hohlwelle anstelle der Kopplungswellen so nicht oder nur extrem schwer genutzt werden kann. Dadurch dass der Wandler aber nun zwischen den Kopplungswellen angeordnet ist, kann dieser aufgrund der Tatsache, dass die Kopplungswellen anstelle einer umlaufenden Hohlwelle Verwendung finden, vergleichsweise einfach angesteuert und mit Arbeitsmedium befüllt oder entleert werden.

In einer weiteren, besonders günstigen Ausgestaltung der Erfindung ist es vorgesehen, dass die Eingangswelle über ein Stirnradgetriebe mit wenigstens einer Hilfswelle verbunden ist. Die Hilfswelle ist ihrerseits wiederum mit einer schaltbaren Kupplung mit der wenigstens einen Kopplungswelle verbindbar. Dieser Aufbau ermöglicht einen alternativen Weg der Leistungsverzweigung, welche für bestimmte Betriebsarten, wie beispielsweise zum Anfahren des Überiagenrngsgetriebes, vorteilhaft genutzt werden kann, wie nachfolgend noch erläutert werden wird.

In einer besonders günstigen Weiterbildung dieser Idee ist es vorgesehen, dass die Anzahl der Hilfswelten und der schaltbaren Kopplungswellen der Anzahl der Kopplungswellen entspricht. In diesem Aufbau wird die bestmögliche Kopplung und die bestmögliche Einleitung der Kräfte in die Kopplungswellen erreicht, wobei insbesondere im Fall von genau zwei Kopplungswellen die eingangs bereits genannten Vorteile dieser zweiten Welle genutzt werden können.

In einer besonders vorteilhaften alternativen Weiterbildung der Idee mit den Hilfswellen ist es vorgesehen, dass die Hilfswellen wenigstens eine Förderpumpe antreiben. Dieser, auch im Aufbau von herkömmlichen Getrieben ähnlich ausgestaltete Sachverhalt, erlaubt das Antreiben der Förderpumpen für das Arbeitsmedium der hydrodynamischen Wandler und/oder Schmierpumpen oder anderer Hilfspumpen durch die Hitfswelle. Die Hilfswelle kann dann über die Pumpe hinaus über die schaltbare Kupplung auf die Kopplungswellen verbunden werden. Der konstruktive Aufbau gegenüber dem herkömmlichen konstruktiven Aufbau des Überlagerungsgetriebes muss also lediglich eine Verlängerung der Hilfswelle sowie eine zusätzliche Kupplung umfassen, um die erfindungsgemäßen Vorteile zu erschließen.

Gemäß einer besonders günstigen Ausgestaltung ist die schaltbare Kupplung dabei als hydrodynamische Kupplung ausgebildet. Prinzipiell wären auch andere Arten von schaltbaren Kupplungen denkbar. Durch die Ausführung als einfache hydrodynamische Kupplung wird jedoch eine gewisse Elastizität der Verbindung erreicht und bei ohnehin vorhandenen hydrodynamischen Komponenten ist der Steuerungsaufwand vergleichsweise gering. Die hydrodynamische Kupplung wird zum Schließen mit dem Arbeitsmedium gefüllt und bewirkt dann eine Kopplung der Hilfswelle mit den Kopplungswellen, ohne dass hier eine vollkommen steife Verbindung entsteht. Durch Ablassen des Arbeitsmediums aus der hydrodynamischen Kupplung wird die Verbindung der Wellen unterbrochen. Nachfolgend wird ein besonders vorteilhaftes Verfahren zum Betreiben eines Überlagerungsgetriebes beschrieben, welches nach einem der Ansprüche 5 bis 10 ausgebildet ist. Bei der erfindungsgemäßen Ausbildung mit zwei hydrodynamischen Wandlern kann nun in erfinderischer und besonders günstiger Art und Weise ein Betrieb des Überlagerungsgetriebes erreicht werden, bei dem jeweils nur einer der beiden Wandler genutzt wird. So kann in einem ersten Drehzahlbereich der eine Wandler und in einem anderen Drehzahlbereich der andere Wandler genutzt werden.

Aufgrund der typischen Charakteristik eines hydrodynamischen Wandlers variiert der Wirkungsgrad eines solchen Wandlers mit sich ändernder Drehzahl. Nun erlaubt die verfahrensgemäß Betriebsweise eines Überlagerungsgetriebes mit zwei Wandlern die Nutzung der Wandler in jeweils unterschiedlichen Drehzahlbereichen. So kann ein Wandler so ausgelegt sein, dass er bei beispielsweise ca. 80 bis 100 % der Nenndrehzahl einen optimalen Wirkungsgrad aufweist. Dieser Wandler wird jedoch dann unterhalb, beispielsweise 80 % der Nenndrehzahl einen eher schlechten Wirkungsgrad aufweisen. Dafür kann nun der zweite Wandler vorgesehen werden, welcher so ausgelegt werden kann, dass er beispielsweise zwischen 60 und 80 % der Nenndrehzahl einen idealen Wirkungsgrad hat. Wird nun bei 80 % der Nenndrehzahl der eine Wandler aktiviert und der andere Wandler deaktiviert, so kann über den gesamten beispielhaften Betriebsbereich von 60 bis 100 % der Nenndrehzahl jeweils der bestmögliche Wirkungsgrad erzielt werden.

Außerdem wird nachfolgend ein erfindungsgemäßes Verfahren beschrieben, welches zum Anfahren des Übertragungsgetriebes nach einem der Ansprüche 7 bis 10 besonders geeignet ist. Dabei wird zum Anfahren des Getriebes, und der mit diesem Getriebe typischerweise fest verbundenen Arbeitsmaschine, die wenigstens eine Hilfswelle mit der wenigstens einen Kopplungswelle verbunden, während der oder die hydrodynamischen Wandler noch inaktiv gehalten werden. Nach dem Anlauf der Ausgangswelle und der mit dieser verbundenen Arbeitsmaschine wird dann der hydrodynamische Wandler aktiviert, während die wenigstens eine schaltbare Kupplung geöffnet wird, so dass die Verbindung zwischen den Hilfswellen und den Kopplungswellen unterbrochen wird. Der Antrieb erfolgt dann über den oder die Wandler und die Kopplungswellen sowie die über die Zwischenwelle direkt übertragene Drehzahl.

Der Aufbau ermöglicht es, das Getriebe beziehungsweise die mit ihm verbundene Arbeitsmaschine auch dann anzufahren, wenn diese einen so hohen Anfahrwiderstand aufweisen, so dass dies mit einem herkömmlichen Aufbau nicht möglich wäre. Dadurch, dass die Hilfswellen über eine weitere Übersetzung angekoppelt sind und über die Kopplungswellen ihre Drehzahl mit der direkt durchgeleiteten Drehzahl überlagern, kann das Getriebe so ausgelegt werden, dass der Antriebsmotor an der Eingangswelle, die mit der Ausgangswelle verbundene Arbeitsmaschine leichter anfahren kann, da die Übersetzung so gestaltbar ist, dass selbst große Anlaufmomente überwunden werden können.

Der weitere Vorteil dieser Variante beim Anfahren des Getriebes ist der, dass keine weitere Anfahrkupplung zwischen Arbeitsmaschine und Überlagerungsgetriebe beziehungsweise Antriebsmaschine und Überlagerungsgetriebe vorgesehen werden muss.

Verfahrensgemäß ist es dabei vorgesehen, dass zum Aktivieren beziehungsweise Deaktivieren von hydrodynamischen Elementen wie Wandlern oder Kupplungen, diese jeweils mit dem Arbeitsmedium befüllt werden beziehungsweise zum Deaktivieren entleert werden. Neben dieser besonders vorteilhaften Ausgestaltung wäre es theoretisch auch denkbar, die einzelnen Elemente jeweils über eine geeignete Anzahl an schaltbaren Kupplungen aktiv oder inaktiv zu schalten.

Weitere vorteilhafte Aspekte der Erfindung ergeben sich aus den nachfolgend dargestellten Ausführungsbeispielen, welche anhand der Figuren exemplarisch erläutert werden.

Dabei zeigt:
- Figur 1: eine schematische Darstellung einer ersten Ausführungsform des Überlagerungsgetriebes;
- Figur 2: eine schematische Darstellung einer ersten alternativen Ausführungsform des Überlagerungsgetriebes;
- Figur 3: eine schematische Darstellung von wrkungsgradkunren des Primär- und des Sekundärwandlers;
- Figur 4: eine schematische Darstellung des Getriebes zum Antrieb der Kopplungswellen;
- Figur 5: eine schematische Darstellung einer zweiten alternativen Ausführungsform des Überlagerungsgetriebes; und
- Figur 6: eine schematische Darstellung einer weiteren alternativen Ausführungsform des Überlagerungsgetriebes.

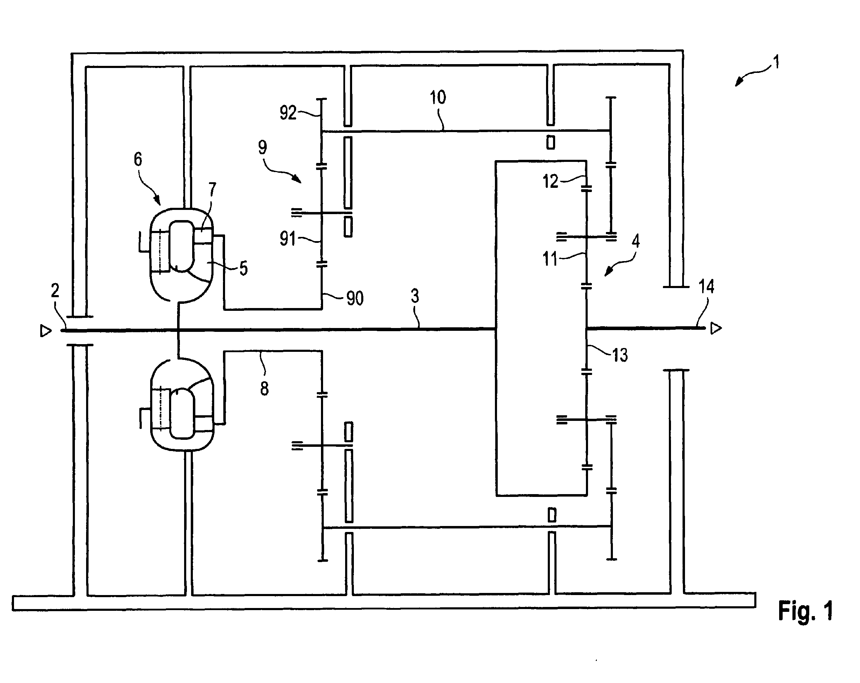

In Figur 1 ist eine erste Ausführungsform des Überlagerungsgetriebes 1 zu erkennen. Der Aufbau des Überlagerungsgetriebes 1 umfasst dabei eine Eingangswelle 2, welche über eine - typischerweise einteilig mit der Eingangswelle 2 ausgebildeten - Zwischenwelle 3 mit einem Differentialgetriebe 4 einerseits und dem Pumpenrad 5 eines hydrodynamischen Wandlers 6 andererseits verbunden ist. Über ein Turbinenrad 7 des hydrodynamischen Wandlers 6 wird somit ein Teil der über die Eingangswelle 2 in das Getriebe 1 eingebrachten Leistung abgezweigt. Diese Leistung wird über die Turbinenradwelle 8 einem Getriebe 9 zugeführt, welches in bevorzugter Art und Weise als Stirnradgetriebe ausgebildet ist. Im dargestellten Ausführungsbeispiel zeigt das Stirnradgetriebe 9 dabei ein zentrales Zahnrad 90, welches aufgrund der durch es hindurch verlaufenden Zwischenwelle 3 typischerweise in der Art eines Hohlrades ausgebildet sein wird. Es ist dabei mit der Turbinenradwelle 8 und somit mit der Turbine 7 verbunden und treibt zwei weitere Zahnräder 91 an, welche wiederum jeweils eins der Zahnräder 92 treiben. Das Stirnradgetriebe 9 leitet so den Leistungsfluss zu Kopplungswellen 10, welche mit den Zahnrädern 92 verbunden sind, und über die Kopplungswellen 10 auf das Differentialgetriebe 4. Das Differentialgetriebe, welches hier als Planetengetriebe 4 ausgebildet ist, überlagert dann die über die Kopplungswellen 10 übertragene Drehzahl mit der über die Zwischenwelle 3 übertragenen Drehzahl. In dem dargestellten Fall wird die über die Kopplungswellen 10 übertragene Drehzahl auf den Steg 11 des Planetengetriebes 4 geleitet, während die über die Zwischenwelle 3 eingeleitete Leistung über das Hohlrad 12 in das Planetengetriebe 4 kommt. Der Abtrieb erfolgt über die Sonne 13, welche mit einer Ausgangswelle 14 des Überiagerungsgetriebes 1 verbunden ist Die beschriebene Kopplung Überlagerungsgetriebes ist dabei beispielhaft zu verstehen. Es wäre natürlich auch denkbar den Abtrieb über den Steg oder das Hohlrad zu realisieren, und dementsprechend die beiden Leistungszweige über die Sonne und das Hohlrad oder über den Steg und die Sonne in das Überlagerungsgetriebe zu leiten.

Aufgrund der an sich bekannten Funktionalität des Überlagerungsgetriebes kann so mit einfachem baulichem Aufwand und insbesondere unter Verzicht auf eine koaxiale Trommel zur Übertragung der über den hydrodynamischen Wandler 6 ausgekoppelten Drehzahl ein sehr einfacher und kompakter Aufbau des Überlagerungsgetriebes realisiert werden. Dieser kann in der üblichen Art und Weise hinsichtlich seiner Drehzahl im Bereich der Ausgangswelle 14 entsprechend variiert werden.

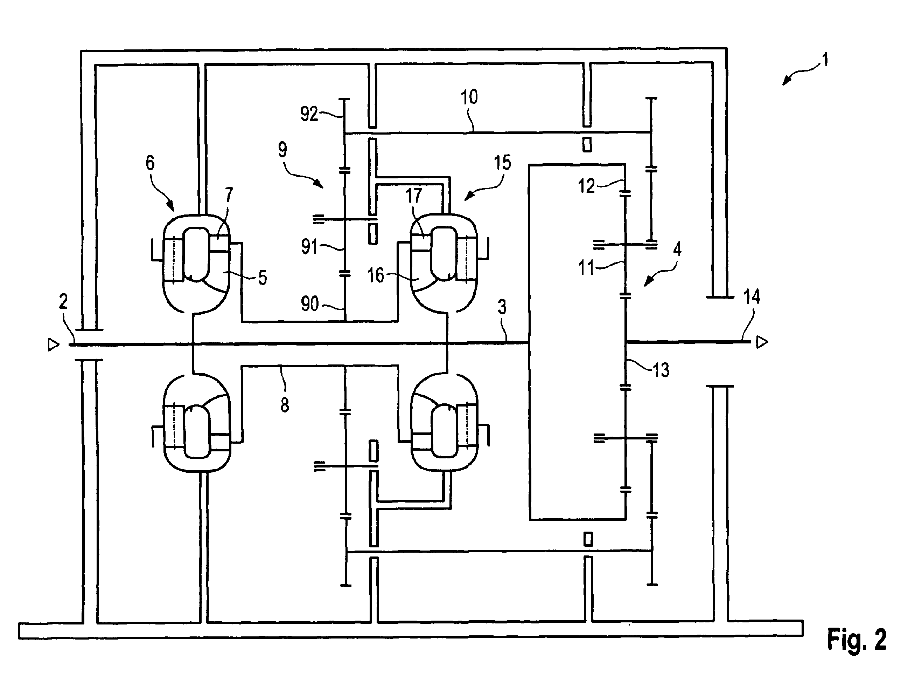

Figur 2 zeigt nun einen alternativen Aufbau des Überlagerungsgetriebes 1, wobei dieses sich lediglich durch das Vorhandensein eines zweiten Wandlers 15 von dem ansonsten identischen Aufbau zur oben beschriebenen ersten Ausführungsform unterscheidet. Dementsprechend sind auch alle Bezugszeichen 1 bis 14 mit den oben dargestellten Elementen identisch und es wird auf diese Funktionalität nicht nochmals eingegangen.
Der zweite Wandler 15 kann, wie im Ausführungsbeispiel dargestellt, vergleichbar mit dem ersten Wandler ausgebildet sein. Es sind jedoch auch alternative Ausgestaltungen, z.B. in mehreren Stufen, denkbar. Auch hier ist ein Pumpenrad 16 mit der Zwischenwelle 3 verbunden und ein Turbinenrad 17 wirkt ebenso auf die Turbinenradwelle 8, welche über das Stirnradgetriebe 9 dann mit den Kopplungswellen 10 verbunden ist. Der Wandler 15 ist dabei zwischen den Kopplungswellen angeordnet, so dass ein außerordentlich kompakter Aufbau des Überlagenrngsgetriebes 1 realisiert werden kann. Im Gegensatz zu einer herkömmlichen Bauart mit einer koaxialen Hohlwelle, ist die Anordnung des Wandlers 15 hier problemlos möglich, da durch die Übertragung der ausgekoppelten Drehzahl über die Kopplungswellen 10 die Zugänglichkeit des zweiten Wandlers 15 zur Steuerung der Leitschaufeln und/oder zum Befüllen oder Entleeren des Wandlers 15 mit dem Arbeitsmedium leicht zugänglich ist.

Der in Figur 2 dargestellte konstruktive Aufbau mit dem ersten Wandler 6 und dem zweiten Wandler 15 ist dabei exemplarisch zu verstehen. Insbesondere die Funktionalität der beiden Wandler 6, 15 als Primärwandler und Sekundärwandler ist nicht an diese Reihenfolge gebunden, so könnte beispielsweise der Primärwandler zwischen den Kopplungswellen 10 angeordnet sein oder ebenso, wie hier exemplarisch dargestellt, der Sekundärwandler.

Der Vorteil, den nun dieser zweite Wandler 15 für die Betriebsweise des Überlagerungsgetriebes 1 liefert, liegt in einer Steigerung des möglichen Wirkungsgrades.

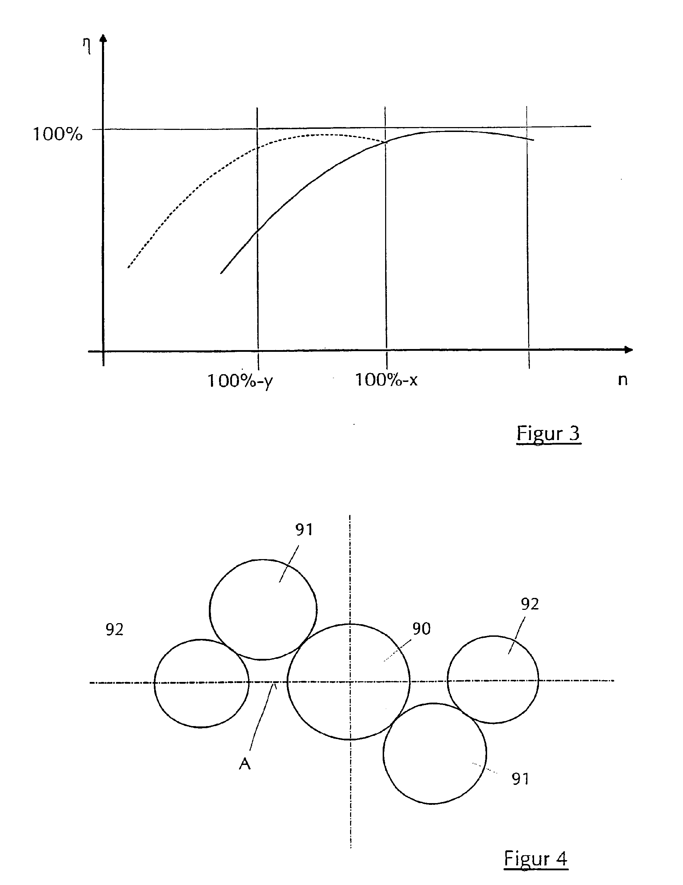

In Figur 3 ist exemplarisch dargestellt, wie der Verlauf des Wirkungsgrades η eines hydrodynamischen Wandlers über der Drehzahl n aussieht. Die durchgezogene Linie zeigt dabei den Wirkungsgradverlauf des Primärwandlers, während die gestrichelte Linie den Wirkungsgradverlauf des Sekundärwandlers zeigt. Das Vorhandensein von zwei Wandlern, welche gleichwirkend mit der Turbinenwelle 8 und der Zwischenwelle 3 verbunden sind, ermöglicht es nun zwei Wandler unterschiedlicher Auslegung einzusetzen. So kann der Primärwandler sein Wirkungsgradoptimum im üblicherweise vorliegenden Betriebspunkt zwischen 100 und 100-x, beispielsweise 80 % der Drehzahl n der Ausgangswelle 14 haben. Bei entsprechend niedrigeren Drehzahlen in der Ausgangswelle 14, beispielsweise zwischen 100-x und 100-y, beispielsweise zwischen 60 und 80 % der maximalen Drehzahl n kann dann der andere auf diesen Drehzahlbereich hinsichtlich seines Wirkungsgrads η optimierte zweite Wandler zum Einsatz kommen. Ein Umschalten vom ersten zum zweiten Wandler erfolgt dabei über ein gleichzeitiges Entleeren des ersten Wandlers und Befüllen des zweiten Wandlers beziehungsweise umgekehrt. Bei diesem Aufbau mit zwei Wandlern kann somit ein wirkungsgradoptimierter Betrieb des Überfagetungsgetriebes 1 gemäß der Erfindung über einen größeren Betriebsbereich hinweg erreicht werden.

Figur 4 zeigt in einer Prinzipdarstellung einen möglichen Aufbau des Getriebes 9 in einer Ansicht in axialer Richtung exemplarisch. Das zentrale Zahnrad 90 ist dabei mit der Turbinenradwelle 8 und somit mit der Turbine 7 verbunden. Es treibt zwei weitere Zahnräder 91 an, welche wiederum jeweils eins der beiden Zahnräder 92 treiben. Diese Zahnräder 92 stehen in Verbindung mit den Kopplungswellen 10, so dass die Leistung von der Turbinenradwelle 8 in das Differentialgetriebe 4 gelangt. Die beiden Zahnräder 91 sind dabei mit ihren Achsen aus der Mitte A zwischen den Achsen der Zahnrädern 90, 92 heraus jeweils nach einer Seite versetzt. Bei diesem hier gewählten Aufbau handelt es sich um eine beispielhafte Möglichkeit, welche jedoch besonders günstig ist, da durch das aus der Mitte versetzen der beiden Zahnräder 91 ein sehr kompakter Aufbau erzielt werden kann, und da bei diesem Aufbau weniger Querkräfte auftreten. Bei einem Aufbau mit mehr als zwei Kopplungswellen 10 lässt sich dieser Aufbau durch eine größere Zahl an Zahnrädern 91, 92 entsprechend anpassen.

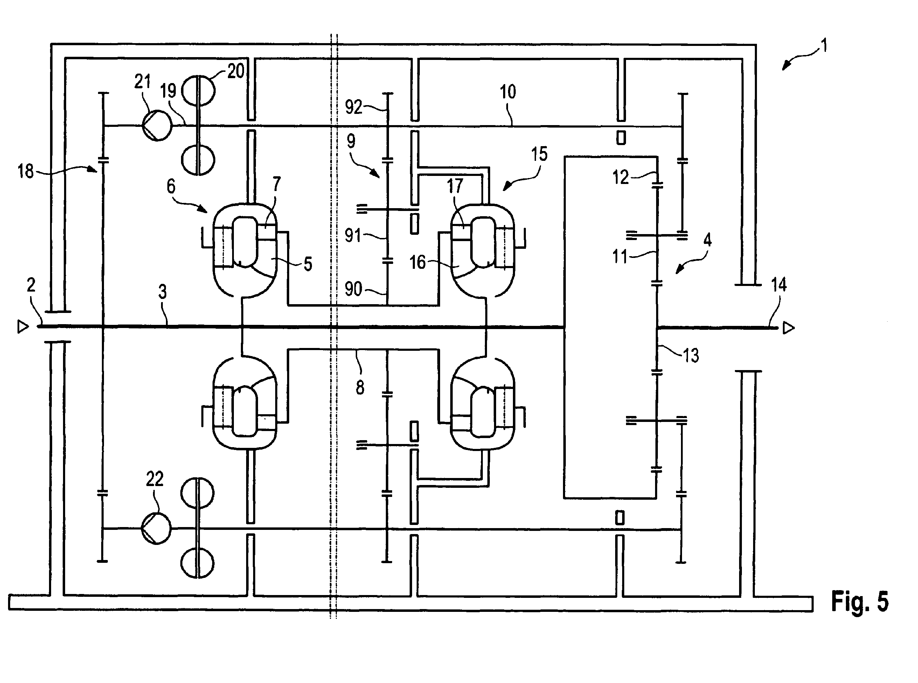

Der Aufbau der Figur 5 zeigt eine weitere Ausführungsform des erfindungsgemäßen Überlagerungsgetriebes 1. Auch hier sind alle Elemente mit denselben Bezugszeichen versehen, wie in den Figuren 1 und 2, sodass hier auf die eigentliche Funktionalität nicht weiter eingegangen wird. Es soll lediglich darauf hingewiesen werden, dass hier der zwischen den Kopplungswellen 10 angeordnete Wandler 15 der Primärwandler ist, während der Wandler 6 als Sekundärwandler betrieben wird. Entlang der doppeltstrichpunktierten Linie lässt sich das Überlagerungsgetriebe 1 dabei aufteilen, so dass ein modularer Aufbau entsteht. Das Modul mit den Kopplungswellen 10 und dem primären Wandler 15 sowie dem Differentialgetriebe 4 kann dabei auch alleine verwendet werden beziehungsweise mit einem anderen Eingangsmodul ergänzt werden, als dem hier dargestellten.

Das hier dargestellte Eingangsmodul weist, wie bereits erwähnt, den Wandler 6 auf, welcher hier in der oben bereits beschriebenen Funktionalität als Sekundärwandler vorgesehen ist. Zusätzlich wird mit der Eingangswelle 2 über ein weiteres Getriebe 18, welches insbesondere als Stirnradgetriebe ausgebildet ist, wenigstens eine Hilfswelle 19 verbunden. Die Hilfswelle 19, wobei im hier dargestellten Ausführungsbeispiel zwei Hilfswellen 19 angeordnet sind, ist dann wiederum über eine schaltbare Kupplung 20 mit den Kopplungswellen 10 verbunden.

Bei Bedarf kann über die schaltbare Kupplung 20 also eine Verbindung zwischen den Hilfswellen 19 und den Kopplungswellen 10 erreicht werden. Dies kann insbesondere beim Anfahren des Getriebes gegen ein sehr starkes Anlaufdrehmoment der an das Getriebe angeschlossenen und über die Ausgangswelle 16 angetriebenen Arbeitsmaschine sinnvoll sein. In dieser Situation kann es nämlich dazu kommen, dass aufgrund des starken entgegenwirkenden Drehmoments der Arbeitsmaschine ein Anfahren des Getriebes mit einem dafür vorgesehenen mit der Eingangswelle 2 gekoppelten Motor, nicht oder nur sehr schwer möglich ist. Eine Alternative wäre hier eine Kupplung zwischen Motor und Getriebe und Arbeitsmaschine, was jedoch üblicherweise nicht gewünscht ist und aufgrund der hohen zu übertragenden Leistungen und aufgrund des benötigten Bauraums Nachteile birgt.

Bei der in Figur 5 dargestellten Ausführungsform des Überlagerungsgetriebes 1 ist es nun möglich, die beiden Wandler 6 und 15 oder falls nur ein Wandler eingesetzt wird, diesen Wandler zum Anfahren des Überiagenrngsgetriebes 1 nicht mit Arbeitsmedium zu füllen. Die Zwischenwelle 3 kann dann die Drehzahl übertragen, ohne dass über den oder die Wandler Leistung ausgekoppelt wird. Werden jedoch die Kupplungen 20 geschlossen oder im bevorzugten Fall, dass hydrodynamische Kupplungen eingesetzt werden, mit dem Arbeitsmedium befüllt, so kommt es zu einer Kopplung der Kopplungswellen 10 und der Hilfswellen 19, welche wiederum über das Getriebe 18, welches insbesondere als Stirnradgetriebe ausgebildet sein kann, mit der Eingangswelle 2 verbunden sind.

Je nach Auslegung des Getriebes 18 werden so zwei Drehzahlen durch das Überlagerungsgebiebe übertragen, nämlich einmal über die Zwischenwelle 3 und einmal über mit den Hilfswellen 19 gekoppelten Kopplungswellen 10. Diese beiden Drehzahlen werden durch das Differentialgetriebe 4 so überlagert, dass eine Übersetzung möglich wird, welche ein Anfahren des Getriebes auch gegen den großen Widerstand einer mit der Ausgangswelle 16 verbundenen Arbeitsmaschine ermöglicht.

Sobald das Anfahrmoment überwunden ist und eine entsprechende Drehzahl erreicht wird, werden die schaltbaren Kupplungen 20 geöffnet. Bei der Verwendung von hydrodynamischen Kupplungen wird hierzu das Arbeitsmedium abgelassen. Dann wird je nach gewünschtem Drehzahlbereich der eine oder sofern vorhanden der andere Wandler 6, 15 gefüllt, so dass das Getriebe wie oben beschrieben, betrieben werden kann.

Der hier dargestellte Aufbau ist wie bereits erläutert, auch denkbar in Kombination mit einem Getriebe mit lediglich einem Wandler. Beim hier dargestellten, bevorzugten modularen Konzept würde dies bedeuten, dass das Eingangsmodul lediglich das Getriebe 18, die Hilfswellen 19 und die Kupplungen 20 aufweist, jedoch auf den hier dargestellten Wandler 6 verzichten würde.

In idealer Weise können die Hilfswellen 19 darüber hinaus verwendet werden, um Hilfsaggregate wie beispielsweise Förderpumpen zu betreiben. In der Darstellung der Figur 5 ist hierzu eine Förderpumpe 21 dargestellt, welche als Schmierölpumpe eingesetzt wird, sowie eine Förderpumpe 22, welche zum Befüllen der Wandler und/oder Kupplungen mit dem Arbeitsmedium dient.

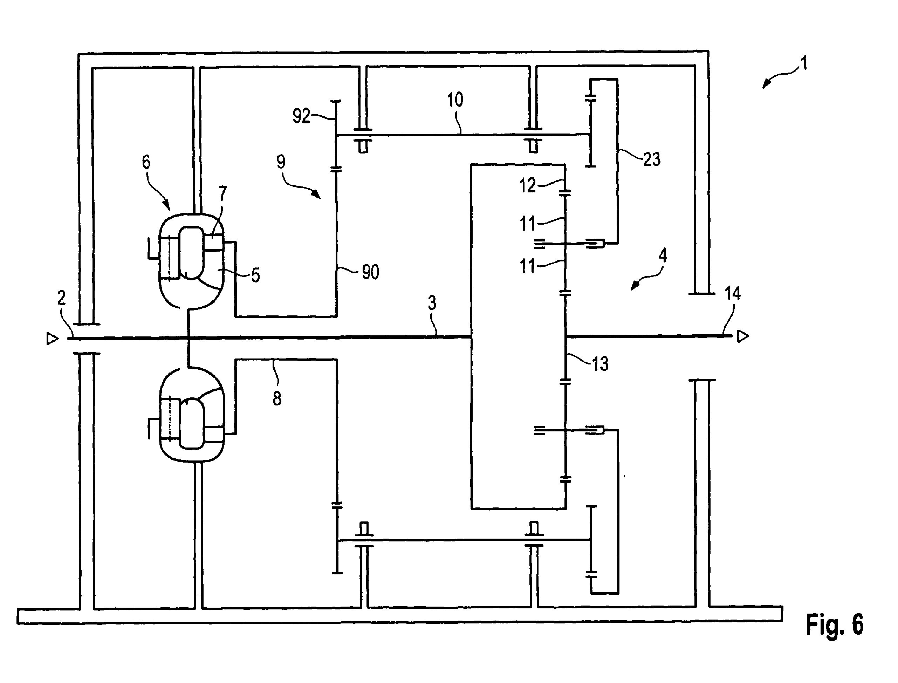

In Figur 6 ist eine weitere alternative Ausführungsform des Überlagerungsgetriebes 1 dargestellt. Der Aufbau ist ähnlich dem in Figur 1 so dass auf die dort beschriebenen Elemente, welche in Figur 6 jeweils mit denselben Bezugszeichen versehen sind, nicht näher eingegangen wird. Der Unterschied liegt hier in der Ausgestaltung des Getriebes 9 und des Differentialgetriebes 4. Beim Getriebe 9 wird auf den Aufbau mit den fünf Stirnrädern verzichtet. Statt dessen treibt das zentrales Stirnrad 90, welches aufgrund der durch es hindurch verlaufenden Zwischenwelle 3 typischerweise in der Art eines Hohlrades ausgebildet sein wird, die Zahnräder 92 an den Kopplungswelle 10 direkt an, sodass hier nur eine Übersetzungsstufe vorhanden ist. Im Gegenzug ist das Differentialgetriebe 4 so ausgelegt, dass die Kopplungswellen 10 den Steg 11 desselben über ein weiteres Hohlrad 23 treiben. Die in diesem speziellen Fall benötigte Umkehr der Drehrichtung wird somit im Leistungsfluss nach den Kopplungswellen 10 im Differentalgetriebe 4 erreicht.

Der hier dargestellte Aufbau des erfindungsgemäßen Überlagerungsgetriebes ermöglicht einen kompakten Aufbau sowie ein über sämtliche Betriebsbereiche ideal zu betreibendes Überiagerungsgetriebe. Außerdem ermöglicht der hier dargestellte Aufbau einen modularen Aufbau, so dass mit vertretbarem Fertigungsaufwand verschiedene Getriebevarianten angeboten werden können.

## Patentansprüche

1. Überlagenrngsgetriebe zum Antrieb einer drehzahlvariablen Arbeitsmaschine mit folgendem Aufbau:
eine Eingangswelle (2) ist mit einer Zwischenwelle (3) verbunden;
mit der Zwischenwelle rotiert ein Pumpenrad (5) eines hydrodynamischen Wandlers ;
ein Turbinenrad (7) des hydrodynamischen Wandlers rotiert mit einem Übertragungsmittel;
die Zwischenwelle und das Übertragungsmittel sind mittels eines Differentialgetriebes mit einer Ausgangswelle (14) verbunden;
**dadurch gekennzeichnet, dass** das Übertragungsmittel als wenigstens zwei Kopplungswellen (10) ausgebildet ist, welche das Turbinenrad (7, 17) des hydrodynamischen Wandlers (6, 15) gemeinsam mit dem Differentialgetriebe (4) verbinden, wobei die wenigstens zwei Kopplungswellen (10) parallel zur Zwischenwelle (3) verlaufen.

2. Übertagerungsgetriebe nach Anspruch 1, **dadurch gekennzeichnet, dass** zwei Kopplungswellen (10) vorgesehen sind, welche beide in einer Ebene liegen, wobei die senkrechte Projektion der Zwischenwelle (3) auf der Ebene zwischen den Kopplungswellen (10) liegt.

3. Überlagerungsgetriebe nach Anspruch 1 oder 2, **dadurch gekennzeichnet, dass** die Kopplungswelle(n) (10) mittels eines Getriebes (9) mit dem Turbinenrad (7, 17) des hydrodynamischen Wandlers (6, 15) verbunden sind.

4. Überlagerungsgetriebe nach Anspruch 3, **dadurch gekennzeichnet, dass** das Getriebe (9) als Stirnradgetriebe ausgebildet ist.

5. Überlagerungsgetriebe nach einem der Ansprüche 1 bis 4, **dadurch gekennzeichnet, dass** ein weiterer hydrodynamischer Wandler (15) vorgesehen ist, dessen Turbinenrad (17) mit dem Turbinenrad (7) des ersten hydrodynamischen Wandlers (6) verbunden ist, und dessen Pumpenrad (16) mit der Zwischenwelle (3) verbunden ist.

6. Überlagenrngsgetriebe nach Anspruch 5, **dadurch gekennzeichnet, dass** wenigstens einer der beiden Wandler (6, 15) so angeordnet ist, das die wenigstens eine Kopplungswelle (10) axial parallel zu dem wenigsten einen Wandler (6,15) zu liegen kommt.

7. Obenagerungsgetriebe nach einem der Ansprüche 1 bis 6, **dadurch gekennzeichnet, dass** die Eingangswelle (2) über ein weiteres Getriebe (18) mit wenigstens einer Hilfswelle (19) verbunden ist, wobei die Hilfswelle (19) mit einer schaltbaren Kupplung (29) mit der wenigstens einen Kopplungswelle (10) verbindbar ist.

8. Obenagerungsgetriebe nach Anspruch 7, **dadurch gekennzeichnet, dass** eine Anzahl an Hilfswellen (19) und schaltbaren Kupplungen (20) vorgesehen ist, die der Anzahl der Kopplungswellen (10) entspricht.

9. Übertagerungsgetriebe nach einem der Ansprüche 7 oder 8, **dadurch gekennzeichnet, dass** über die wenigstens eine Hilfswelle (19) wenigstens eine Förderpumpe (21, 22) angetrieben ist.

10. Überlagerungsgetriebe nach einem der Ansprüche 7, 8 oder 9, **dadurch gekennzeichnet, dass** die wenigstens eine schaltbare Kupplung (20) als hydrodynamische Kupplung ausgebildet ist.

11. Verfahren zum Betreiben eines Überlagerungsgetriebes nach einem der Ansprüche 5 bis 10, **dadurch gekennzeichnet, dass** während des Betriebs des Überlagerungsgetriebes (1) jeweils nur einer der beiden Wandler (6,15) genutzt wird, wobei in einem ersten Drehzahlbereich der eine der Wandler (6) und in einem zweiten Drehzahlbereich der andere der Wandler (15) genutzt wird.

12. Verfahren zum Anfahren des Übertragungsgetriebes nach einem der Ansprüche 7 bis 10, **dadurch gekennzeichnet, dass** zum Anfahren des Übenagerungsgetriebes (1) die wenigstens eine Hilfswelle (19) mit der wenigstens einen Kopplungswelle (10) verbunden wird, während der/die hydrodynamische(n) Wandler (6, 15) noch inaktiv gehalten werden, wobei nach erfolgtem Anlauf der Ausgangswelle (14) (einer) der hydrodynamische(n) Wandler (6, 15) aktiviert wird, während die wenigstens eine schaltbare Kupplung (20) geöffnet wird.

## Claims

1. A superimposed transmission for driving a rotational speed-variable work machine having the following design:
an input shaft is connected to an intermediate shaft;
a pump wheel of a hydrodynamic converter rotates with the intermediate shaft;
a turbine wheel of the hydrodynamic converter rotates with a transmission means;
the intermediate shaft and the transmission means are connected to an output shaft by means of a differential gear;
**characterised in that** the transmission means is designed as at least two coupling shafts (10) which connect the turbine wheel (7,17) of the hydrodynamic converter (6,15) with the differential gear (4), wherein said at least two coupling shafts (10) run parallel to the intermediate shaft (3).

2. A superimposed transmission according to claim 1, **characterised in that** two coupling shafts (10) are provided, which both lie on a plane, i.e. on the plane between the coupling shaft s(10) as seen in the perpendicular projection of the intermediate shaft (3).

3. A superimposed transmission according to claim 1 or 2, **characterised in that** the coupling shaft(s) ((10) are connected to the turbine wheel (7,17) of the hydrodynamic converter (6,15) by means of a transmission (9).

4. A superimposed transmission according to claim 3, **characterised in that** the transmission (9) is designed as a spur gear transmission.

5. A superimposed transmission according to one of the claims 1 to 4, **characterised in** an additional hydrodynamic converter (15) is provided, whose turbine wheel (17) is connected to the turbine wheel (7) of the first hydrodynamic converter (6) and whose pump wheel (16) is connected to the intermediate shaft (3).

6. A superimposed transmission according to claim 5, **characterised in that** at least one of both converters (6,15) is arranged in such a way that said at least one coupling shaft (10) ends up lying axially parallel to said at least one converter (6,15).

7. A superimposed transmission according to any of the claims 1 to 6, **characterised in that** the input shaft (2) is connected to at least one auxiliary shaft (19) via an additional transmission (18), whereas the auxiliary shaft (19) can be connected to said at least one coupling shaft (10) by means of an engageable coupling (29).

8. A superimposed transmission according to claim 7, **characterised in that** a number of auxiliary shafts (19) and engageable couplings (20) is provided which corresponds to the number of coupling shafts (10).

9. A superimposed transmission according to claim 7 or 8, **characterised in that** at least one feeding pump (21,22) is driven by means of said at last one auxiliary shaft (19).

10. A superimposed transmission according to claim 7, 8 or 9, **characterised in that** said at least one engageable coupling (20) is designed as a hydrodynamic coupling.

11. A method for operating a superimposed transmission according to one of the claims 5 to 10, **characterised in that** during the operation of the superimposed transmission (1) only one of both converters (6,15) is used, whereas in a first rotation speed range one of said converters (6) is used and in a second rotation speed range the other of said converters (15) is used.

12. A method for starting the superimposed transmission according to any of the claims 7 to 10, **characterised in that**, for starting the superimposed transmission (1) said at least one auxiliary shaft (19) is connected to said at least one coupling shaft (10), while the hydrodynamic converter(s)(6, 15)are maintained still inactive, while once the output shaft (14) has started, one of the hydrodynamic converters (6,15) is active, whereas said at least one engageable coupling (20) is opened.

## Revendications

1. Organe de transmission à superposition assurant l'entraînement d'une machine de travail à vitesse de rotation variable, dont la construction est la suivante:
un arbre d'entrée (2) est relié à un arbre intermédiaire (3) ;
une aube de pompe (5) d'un convertisseur hydrodynamique tourne avec l'arbre intermédiaire ;
une aube de turbine (7) du convertisseur hydrodynamique tourne avec un moyen de transmission ;
l'arbre intermédiaire et le moyen de transmission sont reliés à un arbre de sortie (14) à l'aide d'une transmission différentielle ;
**caractérisé en ce que** le moyen de transmission est constitué d'au moins deux arbres d'accouplement (10), qui relient l'aube de turbine (7, 17) du convertisseur hydrodynamique (6, 15) d'un seul tenant avec la transmission différentielle (4), tandis que lesdits au moins deux arbres d'accouplement sont parallèles à l'arbre intermédiaire (3).

2. Organe de transmission à superposition selon la revendication 1, **caractérisé en ce que** deux arbres d'accouplement (10) sont prévus, qui sont tous situés dans un plan de telle sorte que la projection perpendiculaire de l'arbre intermédiaire (3) est située sur le plan défini entre les arbres d'accouplement (10).

3. Organe de transmission à superposition selon la revendication 1 ou 2, **caractérisé en ce que** les arbres d'accouplement (10) sont reliés à l'aube de turbine (7, 17) du convertisseur hydrodynamique (6, 15) à l'aide d'une transmission (9).

4. Organe de transmission à superposition selon la revendication 3, **caractérisé en ce que** la transmission (9) est conçue comme une roue dentée cylindrique.

5. Organe de transmission à superposition selon l'une des revendications 1 à 4, **caractérisé en ce qu'**un second convertisseur hydrodynamique (15) est prévu, dont l'aube de turbine (17) est reliée à l'aube de turbine (7) du premier convertisseur hydrodynamique (6) et dont l'aube de pompe (16) est relié à l'arbre intermédiaire (3).

6. Organe de transmission à superposition selon la revendication 5, **caractérisé en ce qu'**au moins l'un des deux convertisseurs (6, 15) est disposé de telle sorte que ledit au moins un arbre d'accouplement (10) se trouve axialement parallèle audit au moins un convertisseur (6, 15).

7. Organe de transmission à superposition selon l'une des revendications 1 à 6, **caractérisé en ce que** l'arbre d'entrée (2) est relié à au moins un arbre auxiliaire (19) par le biais d'une transmission supplémentaire (18) tandis que l'arbre auxiliaire (19) peut être relié à un accouplement commutable (29) par le biais dudit au moins un arbre d'accouplement (10).

8. Organe de transmission à superposition selon la revendication 7, **caractérisé en ce qu'**un certain nombre d'arbres auxiliaires (19) et d'accouplements commutables (20) est prévu, qui correspondent au nombre d'arbres d'accouplements (10).

9. Organe de transmission à superposition selon l'une des revendications 7 ou 8, **caractérisé en ce qu'**au moins une pompe d'alimentation (21, 22) est entraînée par ledit au moins un arbre auxiliaire (19)

10. Organe de transmission à superposition selon l'une des revendications 7, 8 ou 9, **caractérisé en ce que** ledit au moins accouplement commutable (20) est constitué comme un accouplement hydrodynamique.

11. Procédé d'utilisation d'un organe de transmission à superposition selon l'une des revendications 5 à 10, **caractérisé en ce que** l'on utilise toujours seulement d'un des deux convertisseurs (6,15) des pendant l'exploitation de l'organe de transmission à superposition (1) alors que l'on utilise l'un des convertisseurs (6) dans une première plage de vitesse de rotation et l'autre des convertisseurs dans une seconde plage de vitesse de rotation

12. Procédé de démarrage de l'engrenage de transmission selon l'une quelconque des revendications 7 à 10, **caractérisé en ce que** ledit au moins un arbre auxiliaire (19) est relié audit au moins un arbre d'accouplement (10) pour le démarrage de l'engrenage de transmission (1) pendant que le(s) convertisseur(s) hydrodynamique(s) (6, 15) sont toujours maintenus inactifs, alors que l'un des convertisseurs hydrodynamiques (6, 15) est activé après le démarrage réussi de l'arbre de sortie (14), pendant que s'ouvre ledit au moins un accouplement commutable (20).
